# EUROPÄISCHE PATENTSCHRIFT

(11) **EP 3 928 049 B1**
(45) Veröffentlichungstag und Bekanntmachung des Hinweises auf die Patenterteilung: **27.07.2022**
(21) Anmeldenummer: 21721942.7
(22) Anmeldetag: 30.04.2021
(51) Int. Cl.: F27B 7/36, F27B 7/38, F27B 7/42, C04B 7/47, C04B 7/43

(54) **ZEMENTHERSTELLUNGSANLAGE UND VERFAHREN ZUR HERSTELLUNG VON ZEMENTKLINKER**
CEMENT-MANUFACTURING PLANT AND PROCESS FOR PRODUCING CEMENT CLINKER
INSTALLATION ET PROCÉDÉ DE FABRICATION DE CIMENT POUR LA PRODUCTION DE SCORIE DE CIMENT

(30) Priorität: 05.05.2020 DE 102020205672; 05.05.2020 BE 202005300
(43) Veröffentlichungstag der Anmeldung: 29.12.2021
(73) Patentinhaber: thyssenkrupp Industrial Solutions AG, 45143 Essen (DE)
(72) Erfinder: DINKOVA Anna Ivanova, 44287 Dortmund (DE); LEMKE Jost, 59320 Ennigerloh (DE); LAMPE Karl, 59320 Ennigerloh (DE); WILLMS Eike, 44309 Dortmund (DE)
(74) Vertreter: thyssenkrupp Intellectual Property GmbH
(86) Internationale Anmeldenummer: PCT/EP2021/061409
(87) Internationale Veröffentlichungsnummer: WO 2021/224129

(56) Entgegenhaltungen:
- DE-A1-102018 206 673
- DE-B3-102015 004 577
- DE-T2- 60 300 939
- US-A1- 2019 093 950

## Beschreibung

Die Erfindung betrifft eine Zementherstellungsanlage und ein Verfahren zur Herstellung von Zementklinker, wobei Inertgas in zumindest einen Verbrennungsprozess eingeleitet wird.

Aus dem Stand der Technik ist es bekannt, sauerstoffhaltiges Gas zur Verbrennung von kohlenstoffhaltigen Brennstoff in den Drehrohrofen oder den Calcinator einer Zementherstellungsanlage einzuführen. Zur Reduzierung der Abgasmenge und um auf aufwändige Reinigungsverfahren verzichten zu können, ist es beispielsweise aus der DE 10 2018 206 673 A1 bekannt, ein möglichst sauerstoffreiches Verbrennungsgas zu verwenden, sodass der CO2-Gehalt in dem Abgas hoch ist. Die DE 10 2018 206 673 A1 offenbart das Einleiten eines sauerstoffreichen Gases in den Kühlereinlassbereich zur Vorwärmung des Gases und Kühlung des Klinkers.

Bei der Verwendung von mit Sauerstoff angereicherten Verbrennungsgasen, die einen hohen Sauerstoffanteil von mindestens 30% bis 100% aufweisen, können in dem Calcinator und dem Ofen sehr hohe Temperaturen entstehen. Treten diese hohen Temperaturen über einen längeren Zeitraum oder dauerhaft im wandnahen Bereich des Calcinator auf, kann daraus eine Beschädigung der Innenwand des Calcinators resultieren. Beim Auftreten von heißen Zonen in Kombination mit dem eingeleiteten Heißmehl sind auch Schmelzphasen des zu kalzinierenden Heißmehls zu erwarten.

Davon ausgehend ist es Aufgabe der vorliegenden Erfindung, eine Zementherstellungsanlage und ein Verfahren zum Herstellen von Zement bereitzustellen, wobei eine sichere Betriebsweise der Ofenlinie gewährleistet ist und gleichzeitig ein Abgas mit einem hohen CO2- Gehalt erhalten wird. Eine erweiterte Aufgabe besteht darin, das vorgewärmte Rohmehl gleichverteilt in den Calcinator einzutragen und mit den heißen Gasen, die infolge der Calcinatorfeuerung entstehen in Wechselwirkung zu bringen. Eine bevorzugte Aufgabe der Erfindung besteht darin, die Calcinatorfeuerung durch den gezielten Eintrag von Brennstoffen, sauerstoffhaltigen Gasen und heißem Rohmehl in gestufter Form zu realisieren, so dass ein vollständiger Umsatz der eingetragen Brennstoffe, eine vollständige Kalzinierung der eingetragen Rohmehlpartikel und der Transport der Feststoffanteile entlang der Steigleitung des Calcinators sichergestellt ist, ohne dass es zu Überhitzungen in der Steigleitung und zu Agglomerationen der Feststoffpartikel entlang der Steigleitung kommt.

Diese Aufgabe wird erfindungsgemäß durch eine Zementherstellungsanlage mit den Merkmalen des unabhängigen Vorrichtungsanspruchs 1 und durch ein Verfahren mit den Merkmalen des unabhängigen Verfahrensanspruchs 12 gelöst. Vorteilhafte Weiterbildungen ergeben sich aus den abhängigen Ansprüchen.

Eine Zementherstellungsanlage umfasst nach einem Aspekt der Erfindung:
- einen Vorwärmer zum Vorwärmen von Rohmehl,
- einen Calcinator zum Kalzinieren des vorgewärmten Rohmehls,
- einen Ofen mit einem Ofenbrenner, wie beispielsweise eine Brennerlanze zum Brennen des kalzinierten Heißmehls zu Zementklinker, wobei der Ofen einen Verbrennungsgaseinlass zum Einlassen eines Verbrennungsgases in den Ofen mit einem Sauerstoffanteil von 30% bis 100% aufweist, und
- einen Kühler zum Kühlen des Zementklinkers,
- wobei der Calcinator und der Ofen jeweils mindestens einen Brennstoffeinlass zum Einlassen von Brennstoff in den Calcinator und in den Ofen aufweist.

Der Calcinator und der Ofen weist jeweils mindestens einen Inertgaseinlass zum jeweiligen Einlassen von Inertgas in den Calcinator und den Ofen auf.

Der Vorwärmer der Zementherstellungsanlage umfasst vorzugsweise eine Mehrzahl von Zyklonstufen mit jeweils zumindest einem Zyklon zum Abscheiden von Feststoffen aus dem Gasstrom. Durch die Erfindung wird es ermöglicht, den Vorwärmer mit einer deutlich geringeren Gasmenge zu betreiben, verglichen mit einer Zementherstellungsanlage, die Luft als Verbrennungsgas verwendet. Der Abgasvolumenstrom nach dem Vorwärmer liegt beispielsweise bei etwa 0,50 bis 0,90 Nm3/kg Klinker. Das Verhältnis der Aufgabemenge von Rohmehl zu Abgas ist dementsprechend höher möglich als in Anlagen, die mit Luft betrieben werden und beträgt beispielsweise bis 3 kg/kg Feststoff zu Gas, bevorzugt 1,3 bis 1,9 kg/kg Feststoff zu Gas. In dem Vorwärmer wird das an der obersten, ersten Zyklonstufe aufgegebene Rohmehl im Gegenstrom zu den Ofenabgasen vorgewärmt und durchläuft dabei nacheinander die Zyklonstufen.

Zwischen der letzten und der vorletzten Zyklonstufe ist der Calcinator angeordnet, der eine Steigleitung aufweist, in die das Rohmehl mittels einer Calcinatorfeuerung, die aus einer oder mehrerer Brennstellten bestehen kann, erhitzt wird. Der Calcinator weist vorzugsweise eine Brennstoffaufgabevorrichtung auf, die den Brennstoffeinlass und den Inertgaseinlass aufweist. Die Brennstoffaufgabevorrichtung ist beispielsweise rohrförmig oder als radiale Ausbuchtung an dem Steigrohr des Calcinators ausgebildet. Vorzugsweise mündet die Brennstoffaufgabevorrichtung in das Steigrohr des Calzinators, sodass Brennstoff und/ oder Inertgas über die Brennstoffaufgabevorrichtung in das Steigrohr des Calcinators aufgegeben werden. Die Brennstoffaufgabevorrichtung stellt einen thermischen Behandlungsraum dar, der zur Erwärmung und geregelten Zugabe von Brennstoff in die Steigleitung dient.

Vorteilhafterweise ist das Feststoff-Gas-Verhältnis in dem Calcinator deutlich höher verglichen mit konventionellen Anlagen mit Luft als Oxidator. Es treten beispielsweise lokal Feststoffbeladungen von mehr als 2 kg je kg Gas auf, beispielsweise 2 bis 8 kg je kg Gas. In dem Kalzinator wird vorzugsweise der größte Teil, mehr als 60%, beispielsweise ca. 80 %, der Brennstoffwärme umgesetzt. Durch das eingetragenen Rohmehl am unteren Ende des Calcinators ist trotz anfänglicher Sauerstoffkonzentration von 40-80 %, welche eine intensive Feuerung initiiert, eine ausreichende Wärmesenke gegeben, die eine Überhitzung verhindert. Falls grobstückiger Ersatzbrennstoff, beispielsweise mit Kantenlängen von >100 mm verbrannt werden soll, ist vorzugsweise ein geneigter Bereich mit höherer Verweildauer für den Brennstoff vorzusehen. Beispiele für solche geneigten Bereiche sind Treppenstufen, Vorschubroste, Rückschubroste oder andere mechanische oder pneumatische Vorrichtungen. Diese Vorrichtungen fungieren beispielsweise als Brennkammern, Vorbrennkammern oder dienen lediglich der Trocknung und Vorwärmung bzw. Teilvergasung der eingetragenen Brennstoffe. Die Brennstoffe können beliebiger Art hinsichtlich ihrer Korngrößenverteilung und ihres Heizwertes sein.

Die Kalzinationsreaktion verläuft beispielsweise unter CO2 Partialdrücke zwischen 10%-60% am Anfang des Calcinators und bis zu 98% am Ende des Calcinators. Dementsprechend verläuft die Kalzinationsreaktion vorzugsweise bei höheren Temperaturen als im konventionellen Anlage von 700 bis 1100°C, vorzugsweise 900-1000°C.

Das in dem Vorwärmer vorgewärmte und in dem Calcinator kalzinierte Rohmehl wird anschließend dem Ofen zugeführt. Bei dem Ofen handelt es sich vorzugsweise um einen Drehrohrofen mit einem um seine Längsachse rotierbaren Drehrohr, das vorzugsweise in Förderrichtung des zu brennenden Materials leicht geneigt ist, sodass das Material bedingt durch die Rotation des Drehrohrs und die Schwerkraft in Förderrichtung bewegt wird. Der Ofen weist vorzugsweise an seinem einen Ende einen Materialeinlass zum Einlassen von vorgewärmtem, kalziniertem Rohmehl und an seinem dem Materialeinlass gegenüberliegenden Ende einen Materialauslass zum Auslassen des gebrannten Klinkers in den Kühler auf. An dem materialauslassseitigen Ende des Ofens ist vorzugsweise ein Ofenkopf angeordnet, der den Ofenbrenner zum Brennen des Materials und vorzugsweise mindestens einen Brennstoffeinlass zum Einlassen von Brennstoff in den Ofen, vorzugsweise über einen Ofenbrenner und/oder über eine Brennstofflanze, aufweist. Der Ofen weist vorzugsweise eine Sinterzone auf, in der das Material zumindest teilweise aufgeschmolzen wird und insbesondere eine Temperatur von 1500°C bis 1900°C, vorzugsweise 1450°C bis 1750°C aufweist. Die Sinterzone umfasst beispielsweise den Ofenkopf, vorzugsweise das in Förderrichtung des Materials hintere Drittel des Ofens.

Das sauerstoffhaltige Verbrennungsgas wird beispielsweise vollständig oder teilweise direkt in den Ofenkopf eingeleitet, wobei der Ofenkopf beispielsweise einen Verbrennungsgaseinlass aufweist. Vorzugsweise wird das Verbrennungsgas vollständig oder teilweise über den Materialauslass des Ofens in diesen eingeführt. Das dem Ofen zugeführte Verbrennungsgas hat beispielsweise einen Sauerstoffanteil von mehr als 30% bis 75%, vorzugsweise mehr als 95%. Das Verbrennungsgas besteht beispielsweise vollständig aus reinem Sauerstoff, wobei in diesem Fall der Sauerstoffanteil an dem Verbrennungsgas 100% beträgt. Bei dem Ofenbrenner kann es sich beispielsweise um eine Brennerlanze handeln. An den Materialauslass des Ofens schließt sich vorzugsweise der Kühler zum Kühlen des Zementklinkers an.

Der Kühler weist eine Fördereinrichtung zum Fördern des Schüttguts in Förderrichtung durch den Kühlgasraum auf. Der Kühlgasraum umfasst einen ersten Kühlgasraumabschnitt mit einem ersten Kühlgasstrom und einen sich in Förderrichtung des Schüttguts an diesen anschließenden zweiten Kühlgasraumabschnitt mit einem zweiten Kühlgasstrom. Der Kühlgasraum ist vorzugsweise nach oben durch eine Kühlgasraumdecke und nach unten durch einen dynamischen und/ oder statischen Rost, vorzugsweise durch das auf diesem liegende Schüttgut, begrenzt. Bei dem Kühlgasraum handelt es sich insbesondere um den gesamten von Kühlgas durchströmten Raum des Kühlers oberhalb des Schüttguts. Der Kühlgasstrom strömt durch den dynamischen und/ oder statischen Rost, insbesondere durch die Fördereinrichtung, durch das Schüttgut und in den Kühlgasraum. Der erste Kühlgasraumabschnitt ist vorzugsweise in Strömungsrichtung des zu kühlenden Schüttguts direkt hinter dem Kühlereinlass, insbesondere dem Materialauslass des Ofens, angeordnet. Vorzugsweise fällt der Klinker aus dem Ofen in den ersten Kühlgasraumabschnitt.

Der erste Kühlungsraumabschnitt weist vorzugsweise einen statischen Rost und/ oder dynamischen Rost auf, der unterhalb des Materialauslasses des Ofens angeordnet ist, sodass der aus dem Ofen austretende Klinker schwerkraftbedingt auf den statischen Rost fällt. In den ersten Kühlgasraumabschnitt strömt vorzugsweise ausschließlich der erste Kühlgasstrom, der beispielsweise mittels eines Ventilators oder druckbeladenen Kessels oder entsprechende andere Vorrichtung beschleunigt wird. Der zweite Kühlgasraumabschnitt schließt sich in Förderrichtung des Schüttguts an den ersten Kühlgasraumabschnitt an und wird vorzugsweise von dem ersten Kühlgasraumabschnitt mittels einer Trennvorrichtung gastechnisch getrennt. In den zweiten Kühlgasraumabschnitt strömt vorzugsweise ausschließlich der zweite Kühlgasstrom, der beispielsweise mittels mindestens eines Ventilators beschleunigt wird.

Der zweite Kühlgasraumabschnitt weist vorzugsweise einen dynamischen Rost zur Förderung des Schüttguts durch den Kühlgasraum auf. Bei dem durch den ersten Kühlgasraumabschnitt strömenden ersten Kühlgasstrom handelt es sich beispielsweise um reinem Sauerstoff oder einem Gas mit einem Anteil von weniger als 35 Vol%, insbesondere weniger als 21 Vol%, vorzugsweise 15 Vol% oder weniger Stickstoff und/oder Argon und/ oder einem Sauerstoffanteil von mehr als 20,5%, insbesondere mehr als 30% bis 75%, vorzugsweise mehr als 95%. Der erste Kühlgasraumabschnitt schließt sich vorzugsweise direkt an den Materialauslass des Ofens, vorzugsweise an den Ofenkopf des Ofens an, sodass das Kühlgas in dem Kühler erwärmt und anschließend in den Drehrohrofen strömt und als Verbrennungsgas verwendet wird. Bei dem zweiten Kühlgasstrom handelt es sich beispielsweise um Luft.

Der Kühler weist vorzugsweise eine Trennvorrichtung zur gastechnischen Trennung der Kühlgasraumabschnitte voneinander auf.

Bei dem Inertgas handelt es sich beispielsweise um CO2 oder Wasserdampf. Das Zuführen von Inertgas in den Calcinator und/ oder den Ofen bietet den Vorteil einer Verzögerung, insbesondere einer Verlangsamung, der Verbrennung, sodass eine Beschädigung des Ofens und/oder des Calcinators verhindert wird.

Gemäß einer ersten Ausführungsform sind der Brennstoffeinlass und der Inertgaseinlass separat zueinander angeordnet und bilden jeweils einen Einlass in den Ofen und/ oder den Calcinator aus. Beispielsweise ist der Inertgaseinlass als ringförmiger Einlass um den Brennstoffeinlass herum ausgebildet. Die Leitung zum Leiten des Brennstoffs und des Inertgases ist beispielsweise als Doppelrohr, vorzugsweise als konzentrische Rohre mit unterschiedlichen Durchmessern, ausgebildet. Vorzugsweise wird das Inertgases direkt in die Nähe des Brennstoffeinlasses oder der Brennstoffaufgabevorrichtung geleitet. Dadurch wird eine sparsame Zuführung des teuren Inertgases ermöglicht.

Gemäß einer weiteren Ausführungsform bilden der Brennstoffeinlass und der Inertgaseinlass zusammen einen Einlass aus. Der Brennstoff und das Inertgas werden vorzugsweise in einer gemeinsamen Leitung jeweils dem Calcinator oder dem Ofen zugeführt. Dies ist konstruktiv weniger aufwändig und somit kostengünstiger.

Der Calcinator und/ oder der Ofen weist gemäß einer weitere Ausführungsform jeweils eine Mehrzahl von Inertgaseinlässen, insbesondere zum Einlassen von unterschiedlichen Inertgasen auf. Es ist ebenfalls denkbar, dass der Calcinator eine Mehrzahl von Brennstoffaufgabevorrichtungen, insbesondere zwei oder drei Brennstoffaufgabevorrichtungen, aufweist, denen jeweils ein Inertgaseinlass zugeordnet ist. Die Brennstoffaufgabevorrichtungen sind vorzugsweise zueinander beabstandet über die Länge und/ oder die Breite der Steigleitung angeordnet. Beispielsweise sind die Brennstoffaufgabevorrichtungen in einem Winkel von 0°, vorzugsweise 60° bis 270° über den Querschnitt der Steigleitung des Calcinators versetzt zueinander angeordnet. Es können dabei unterschiedliche Arten von Brennstoffaufgabevorrichtungen miteinander kombiniert und auch unterschiedlich angeordnet werden.

Gemäß einer weiteren Ausführungsform weist der Calcinator mindestens einen Rohmehleinlass zum Einlassen von Rohmehl in den Calcinator auf, der in Strömungsrichtung des Gases innerhalb des Calcinators stromaufwärts des Brennstoffeinlasses und des Inertgaseinlasses angeordnet ist. Beispielsweise ist der Rohmehleinlass zwischen zwei Brennstoffaufgabevorrichtungen oder Brennstoffeinlässen im Calcinator angeordnet. Vorzugsweise ist mindestens ein Rohmehleinlass in Strömungsrichtung vor dem Brennstoffeinlass angeordnet. Dadurch wird ein Überhitzen des Rohmehls verhindert. Die durch die Calcinatorfeuerung erzeugte Verbrennungszone kann die Wärme direkt an die Partikel des Rohmehls abgeben. Das Inertgas dient vorzugsweise zusätzlich als eine Temperatursenke und verhindert zudem das spontane Zünden des eingetragenen Brennstoffes direkt am Brenner- oder am Brennerlanzenmund bzw. am Einlass der Brennstoffaufgabevorrichtung.

Der Calcinator weist gemäß einer weiteren Ausführungsform mindestens einen, vorzugsweise zwei oder mehrere Rohmehleinlässe zum Einlassen von Rohmehl in den Calcinator auf und wobei mindestens einer der Rohmehleinlässe und vorzugsweise zumindest ein Brennstoffeinlass in Strömungsrichtung des Gases innerhalb der Calcinatorsteigleitung stromaufwärts des Brennstoffeinlasses, insbesondere stromaufwärts der Brennstoffaufgabevorrichtung, angeordnet ist. Vorzugsweise ist zumindest ein oder alle Rohmehleinlässe stromaufwärts eines oder aller Brennstoffeinlässe angeordnet. Beispielsweise ist der Rohmehleinlass zu der Brennstoffaufgabevorrichtung im Calcinator beabstandet angeordnet.

Gemäß einer weiteren Ausführungsform weist die Zementherstellungsanlage eine Steuerungseinrichtung auf, die mit einer Temperaturmesseinrichtung innerhalb des Calcinators verbunden ist und derart ausgebildet ist, dass sie die Menge an Rohmehl, Inertgas und/ oder Brennstoff in den Calcinator in Abhängigkeit der ermittelten Temperatur der Temperaturmesseinrichtung steuert/regelt. Die Temperaturmesseinrichtung ist vorzugsweise derart mit der Steuerungseinrichtung verbunden, dass sie die ermittelte Temperatur an die Steuerungseinrichtung übermittelt. Die Temperaturmesseinrichtung ist beispielsweise stromabwärts einer der Brennstoffaufgabevorrichtungen angeordnet. Der Calcinator weist beispielsweise eine Mehrzahl von Temperaturmesseinrichtungen auf, die jeweils mit der Steuerungseinrichtung zur Übermittlung der ermittelten Temperatur verbunden sind. Beispielsweise ist jeder Brennstoffaufgabevorrichtung eine Temperaturmesseinrichtung nachgeschaltet. Es ist ebenfalls denkbar, dass eine Mehrzahl von Temperaturmesseinrichtungen innerhalb der Steigleitung des Calcinators vorzugsweise gleichmäßig verteilt angeordnet sind.

Beispielsweise wird in Abhängigkeit der Temperatur die Brennstoffmenge in die einzelnen Brennstoffaufgabevorrichtungen gesteuert. Dadurch wird eine gleichmäßige und geregelte Verbrennung innerhalb des Calcinators mit einer homogenisierten Temperaturverteilung eingestellt und Temperaturspitzen, die den Calcinator schädigen oder das Material zum Schmelzen bringen können, vermieden.

Die Steuerungseinrichtung ist beispielsweise derart ausgebildet, dass sie die ermittelte Temperatur mit einem vorab bestimmten Sollwert vergleicht und bei einer Abweichung der ermittelten Temperatur von dem Sollwert die Brennstoffmenge, die Inertgasmenge und/ oder die Rohmehlmenge in den Calcinator steuert/ regelt. Überschreitet die ermittelte Temperatur beispielsweise den vorabbestimmten Sollwert, ist die Steuerungseinrichtung derart ausgebildet, dass sie die Brennstoffmenge verringert, die Rohmehlmenge erhöht und/ oder die Inertgasmenge erhöht. Unterschreitet die ermittelte Temperatur beispielsweise den vorabbestimmten Sollwert, ist die Steuerungseinrichtung derart ausgebildet, dass sie die Brennstoffmenge erhöht, die Rohmehlmenge verringert und/ oder die Inertgasmenge verringert.

Gemäß einer weiteren Ausführungsform ist innerhalb des Calcinators zumindest eine Querschnittsverengung des Calcinatorquerschnitts ausgebildet. Beispielsweise weist der Calcinator eine Mehrzahl von Querschnittsverengungen in der Steigleitung auf. Dadurch wird die Strömung innerhalb der Steigleitung beschleunigt und anschließend verlangsamt, sodass sich vorzugsweise strömungsberuhigte Bereiche ausbilden.

Innerhalb des Calcinators ist gemäß einer weiteren Ausführungsform zumindest ein Leitelement zum Leiten der Gasströmung angeordnet. Dadurch wird vorzugsweise eine bessere Durchmischung des Gases mit dem Rohmehl erreicht. Diese Funktion hat für die Prozessführung mit hohen Sauerstoff- und niedrigen Stickstoffgehalten dahingehend eine besondere Bedeutung, dass durch die verminderte Gasmenge im Calcinator aufgrund des fehlenden Stickstoff-Anteile sich nach Eintrag des Materials eine höhere Beladung einstellt als bei Anlagen die mit Luft als Oxidationsmittel betrieben werden. Für die Tragfähigkeit der Partikel ist es daher vorteilhaft, wenn das Material gleichmäßig über den Querschnitt der Steigleitung des Calcinators verteilt wird. Ein Absinken des Mehls in eine tiefere stromabwärts gelegene Zone der Calcinatorsteigleitung wird verhindert. Das Leitelement ist beispielsweise als eine Platte, ein Kasten, ein Kegel und/ oder eine Pyramide ausgebildet. Vorzugsweise sind innerhalb der Steigleitung eine Mehrzahl von Leitelementen angeordnet, die beispielsweise gleichmäßig zueinander beabstandet sind. Die Leitelemente sind beispielsweise aus Keramik oder einem keramischen Faserverbundwerkstoff ausgebildet. Die Leitelemente sind insbesondere innerhalb der Steigleitung und/ oder in der Brennstoffaufgabevorrichtung angeordnet. Vorzugsweise ist ein Leitelement an dem Auslass der Brennstoffaufgabevorrichtung in die Steigleitung angeordnet, sodass der Einlass von Brennstoff in die Steigleitung mittels des Leitements geleitet wird. Vorzugsweise erstreckt sich das Leitelement von der Brennstoffaufgabevorrichtung in die Steigleitung hinein. Das Leitelement ist beispielsweise derart ausgebildet und angeordnet, dass es den Brennstoff in einem Winkel zur Innenwand des Steigrohrs leitet. Beispielsweise bildet das Leitelement einen Diffusor mit einem sich relativ zu der Brennstoffaufgabevorrichtung erweiternden Querschnitt aus.

Gemäß einer weiteren Ausführungsform weist der Calcinator eine Mehrzahl von Brennstoffaufgabevorrichtungen auf, die jeweils einen Brennstoffeinlass und einen Inertgaseinlass umfassen und wobei jeder Brennstoffaufgabevorrichtung ein Leitelement zugeordnet ist. Die jeweilige Brennstoffaufgabevorrichtung ist beispielsweise auf dem gleichen Höhenniveau mit dem Leitelement angeordnet oder dem Leitelement direkt vor- oder nachgeschaltet. Dies ermöglicht eine optimierte Verteilung des Rohmehls und des Inertgases innerhalb der Steigleitung, insbesondere in dem Bereich der Brennstoffaufgabevorrichtung.

Zwischen dem Ofen und dem Calcinator oder nur in dem Calcinator ist gemäß einer weiteren Ausführungsform ein Brennraum angeordnet, der einen Mehleinlass, einen Brennstoffeinlass, beispielsweise eine Brennaufgabevorrichtung und einen Inertgaseinlass aufweist. Der Brennraum weist beispielsweise einen runden Querschnitt auf oder ist zyklonförmig ausgebildet. Es ist ebenfalls denkbar, dass der Brennraum als Calcinator-Reaktionsraum zum gleichzeitigen Kalzinieren ausgebildet ist, sodass zwei Calcinatoren in Reihe oder parallel geschaltet sind. Dies sorgt für eine Regelung des Brennstoffumsatzes und der Kalzinierung innerhalb des Calcinators oder der Calcinatoren.

Die Erfindung umfasst auch ein Verfahren zum Herstellen von Zementklinker aufweisend die Schritte:
- Vorwärmen von Rohmehl in einem Vorwärmer,
- Kalzinieren des vorgewärmten Rohmehls in einem Calcinator,
- Brennen des vorgewärmten und kalzinierten Rohmehls in einem Ofen mit einem Ofenbrenner zu Zementklinker, wobei dem Ofen ein Verbrennungsgas mit einem Sauerstoffanteil von 30% bis 100% zugeführt wird, und
- Kühlen des Zementklinkers in einem Kühler, wobei dem Ofen und dem Calcinator ein Brennstoff zugeführt wird.

Dem Ofen und dem Calcinator wird jeweils ein Inertgas zugeführt.

Die voran beschriebenen Ausführungen und Vorteile der Zementherstellungsanlage treffen in verfahrensgemäßer Entsprechung auch auf das Verfahren zur Herstellung von Zementklinker zu.

Das Inertgas wird gemäß einer weiteren Ausführungsform zusammen mit oder separat zu dem Brennstoff und/ oder dem Rohmehl dem Calcinator und/ oder dem Ofen zugeführt. Beispielsweise werden zumindest zwei unterschiedliche Inertgase in den Calcinator und/ oder den Ofen eingeleitet.

Gemäß einer weiteren Ausführungsform wird das Rohmehl in Strömungsrichtung des Gases innerhalb des Calcinators vor dem Brennstoff und dem Inertgas in den Calcinator eingelassen. Beispielsweise wird zumindest ein Teil des Rohmehls und der Brennstoff in Strömungsrichtung des Gases innerhalb des Calcinators vor einer Brennstoffaufgabevorrichtung in den Calcinator eingelassen. Vorzugsweise weist das Rohmehl eine Temperatur von 700C bis 900°C beim Einlassen in den Calcinator auf.

Gemäß einer weiteren Ausführungsform wird die Temperatur innerhalb des Calcinators ermittelt und die Menge an Rohmehl, Inertgas und/ oder Brennstoff, die dem Calcinator zugeführt wird, in Abhängigkeit der ermittelten Temperatur gesteuert/geregelt.

Innerhalb des Calcinators wird gemäß einer weiteren Ausführungsform ein strömungsberuhigter Bereich mittels mindestens eines Leitelements oder mindestens einer Querschnittsverengung des Calcinatorquerschnitts ausgebildet.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung einer Zementherstellungsanlage mit einem Calcinator und einem Ofen gemäß einem Ausführungsbeispiel.
- Fig. 2: zeigt eine schematische Darstellung eines Calcinators mit einem Inertgaseinlass gemäß einem weiteren Ausführungsbeispiel.
- Fig. 3: zeigt eine schematische Darstellung eines Calcinators mit einem Inertgaseinlass gemäß einem weiteren Ausführungsbeispiel.
- Fig. 4: zeigt eine schematische Darstellung eines Calcinators mit einem Leitelement gemäß zwei weiteren Ausführungsbeispielen.

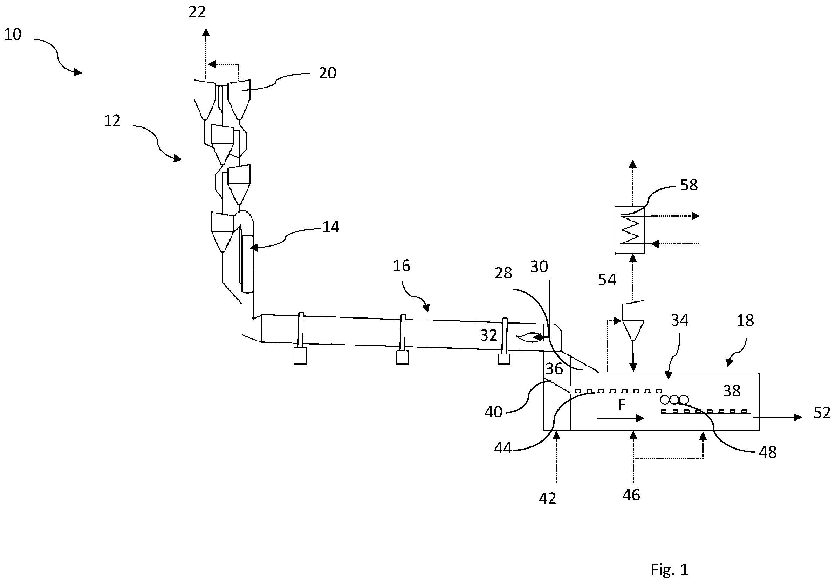

Fig. 1 zeigt eine Zementherstellungsanlage 10 mit einem einsträngigen Vorwärmer 12 zur Vorwärmung von Rohmehl, einen Calcinator 14 zum Kalzinieren des Rohmehls, einen Ofen 16, insbesondere einen Drehrohrofen zum Brennen des Rohmehls zu Klinker und einen Kühler 18 zum Kühlen des in dem Ofen 16 gebrannten Klinkers.

Der Vorwärmer 12 umfasst eine Mehrzahl von Zyklonen 20 zum Abscheiden des Rohmehls aus dem Rohmehlgasstrom. Beispielhaft weist der Vorwärmer 12 fünf Zyklone 20 auf, die in vier Zyklonstufen untereinander angeordnet sind. Der Vorwärmer 12 weist einen nicht dargestellten Materialeinlass zum Einlassen von Rohmehl in die zwei Zyklone 20 umfassende, oberste Zyklonstufe des Vorwärmers 12 auf. Das Rohmehl durchströmt nacheinander die Zyklone 20 der Zyklonstufen im Gegenstrom zu dem Ofen- und/oder Calcinatorabgas und wird dadurch erwärmt. Zwischen der letzten und der vorletzten Zyklonstufe ist der Calcinator 14 angeordnet. Der Calcinator 14 weist eine Steigleitung, insbesondere ein Steigrohr, mit mindestens einer Calcinatorfeuerung zum Erhitzen des Rohmehls auf, sodass eine Kalzinierung des Rohmehls in dem Calcinator 14 erfolgt. Des Weiteren weist der Calcinator 14 einen Brennstoffeinlass zum Einlassen von Brennstoff und einen Inertgaseinlass zum Einlassen eines Inertgases in die Steigleitung auf. Der Calcinator 14 weist weiter einen Verbrennungsgaseinlass 26 zum Einlassen von sauerstoffhaltigem Verbrennungsgas in die Steigleitung des Calcinators 14 auf. Bei dem Verbrennungsgas handelt es sich insbesondere um das Ofenabgas, das mit Sauerstoff angereichert ist. Der Sauerstoffanteil des Verbrennungsgases beträgt maximal 85% zwischen dem Ofen 16 und dem Calcinator 14. Das Calcinatorabgas wird in den Vorwärmer 12, vorzugsweise in die vorletzte Zyklonstufe eingeleitet und verlässt den Vorwärmer 12 hinter der obersten Zyklonstufe als Vorwärmerabgas 22.

In Strömungsrichtung des Rohmehls ist dem Vorwärmer 12 der Ofen 16 nachgeschaltet, sodass das in dem Vorwärmer 12 vorgewärmte und in dem Calcinator 14 kalzinierte Rohmehl in den Ofen 16 strömt. Der Materialeinlass/ Gasauslass 25 des Ofens 16 ist direkt mit der Steigleitung des Calcinators 14 verbunden, sodass das Ofenabgas in den Calcinator 14 und anschließend in den Vorwärmer 12 strömt. Bei dem Ofen 16 handelt es sich beispielhaft um einen Drehrohrofen mit einem um seine Längsachse rotierbaren Drehrohr, das in einem leicht abfallenden Winkel angeordnet ist. Der Ofen 12 weist an dem materialauslassseitigen Ende innerhalb des Drehrohrs einen Ofenbrenner 28 und einen zugehörigen Brennstoffeinlass 30 auf. Der Materialauslass des Ofens 16 ist an dem Materialeinlass 25 gegenüberliegenden Ende des Drehrohrs angeordnet, sodass das Rohmehl innerhalb des Drehrohrs durch die Rotation des Drehrohrs in Richtung des Ofenbrenners 28 und des Materialauslasses gefördert wird. Das Rohmehl wird innerhalb des Ofens 16 zu Zementklinker gebrannt. Die Sinterzone 32 umfasst den materialauslassseitigen, hinteren Bereich des Drehrohrs, vorzugsweise das in Materialströmungsrichtung hintere Drittel.

An den Materialauslass des Ofens 16 schließt sich der Kühler 18 zum Kühlen des Klinkers an. Der Kühler 18 weist einen Kühlgasraum 34 auf, in dem der Klinker durch einen Kühlgasstrom gekühlt wird. Der Klinker wird In Förderrichtung F durch den Kühlgasraum 34 gefördert. Der Kühlgasraum 34 weist einen ersten Kühlgasraumabschnitt 36 und einen zweiten Kühlgasraumabschnitt 38 auf, der sich in Förderrichtung F an den ersten Kühlgasraumabschnitt 36 anschließt. Der Ofen 16 ist über den Materialauslass des Ofens 16 mit dem Kühler 18 verbunden, sodass der in dem Drehrohrofen 20 gebrannte Klinker in den Kühler 18 fällt.

Der erste Kühlgasraumabschnitt 36 ist unterhalb des Materialauslasses des Ofens 16 angeordnet, sodass der Klinker von dem Ofen 16 in den ersten Kühlgasraumabschnitt 36 fällt. Der erste Kühlgasraumabschnitt 36 stellt einen Einlaufbereich des Kühlers 18 dar und weist vorzugsweise einen statischen Rost 40 auf, der den aus dem Ofen 16 austretenden Klinker aufnimmt. Der statische Rost 40 ist insbesondere vollständig in dem ersten Kühlgasraumabschnitt 36 des Kühlers 10 angeordnet. Vorzugsweise fällt der Klinker aus dem Ofen 16 direkt auf den statischen Rost 40. Der statische Rost 40 erstreckt sich vorzugsweise vollständig in einem Winkel von 10° bis 35°, vorzugsweise 14° bis 33°, insbesondere 21° bis 25° zur Horizontalen, sodass der Klinker in Förderrichtung entlang des statischen Rostes 40 auf diesem gleitet.

An den ersten Kühlgasraumabschnitt 36, schließt sich der zweiter Kühlgasraumabschnitt 38 des Kühlers 18 an. In dem ersten Kühlgasraumabschnitt 36 des Kühlers 18 wird der Klinker insbesondere auf eine Temperatur von weniger als 1000°C abgekühlt, wobei die Abkühlung derart erfolgt, dass ein vollständiges Erstarren von in dem Klinker vorhandenen flüssigen Phasen in feste Phasen erfolgt. Beim Verlassen des ersten Kühlgasraumabschnitt 36 des Kühlers 18 liegt der Klinker vorzugsweise vollständig in der festen Phase und einer Temperatur von maximal 1000°C vor. In dem zweiten Kühlgasraumabschnitt 38 des Kühlers 18 wird der Klinker weiter abgekühlt, vorzugsweise auf eine Temperatur von weniger als 100°C. Vorzugsweise kann der zweite Kühlgasstrom auf mehrere Teilgasströme aufgeteilt werden, die unterschiedliche Temperaturen aufweisen.

Der statische Rost des ersten Kühlgasraumabschnitts 36 weist beispielsweise Durchlässe auf, durch welche ein Kühlgas in den Kühler 18 und den Klinker eintritt. Das Kühlgas wird beispielsweise durch wenigstens einen unterhalb des statischen Rosts 40 angeordneten Ventilator, Gebläse oder Druckbehälter erzeugt, sodass ein erster Kühlgasstrom 42 von unten durch den statischen Rost in den ersten Kühlgasraumabschnitt 36 strömt. Bei dem ersten Kühlgasstrom 42 handelt es sich beispielsweise um reinen Sauerstoff oder ein Gas mit einem Anteil von 15 Vol% oder weniger Stickstoff und einem Anteil von 30 Vol% oder mehr Sauerstoff. Der erste Kühlgasstrom 42 durchströmt den Klinker und strömt anschließend in den Ofen 16. Der erste Kühlgasstrom bildet beispielsweise teilweise oder vollständig das Verbrennungsgas des Ofens 16 aus. Der hohe Anteil an Sauerstoff in dem Verbrennungsgas führt zu einem Vorwärmerabgas, das im Wesentlichen aus CO2 und Wasserdampf besteht und weist den Vorteil auf, dass auf aufwändige nachgeschaltete Reinigungsverfahren zur Abgasreinigung verzichtet werden kann. Des Weiteren wird eine Reduktion der Prozessgasmengen erreicht, sodass die Anlage erheblich kleiner dimensioniert werden kann.

Innerhalb des Kühlers 18 wird der zu kühlende Klinker in Förderrichtung F bewegt. Der zweite Kühlgasraumabschnitt 38 weist vorzugsweise einen dynamischen, insbesondere bewegbaren, Rost 44 auf, der sich in Förderrichtung F an den statischen Rost 40 anschließt. Unterhalb des dynamischen Rosts 44 sind beispielhaft eine Mehrzahl von Ventilatoren angeordnet, mittels welcher der zweite Kühlgasstrom 46 von unten durch den dynamischen Rost 44 geblasen wird. Bei dem zweiten Kühlgasstrom 46 handelt es sich beispielsweise um Luft.

An den dynamischen Rost 44 des zweiten Kühlgasraumabschnitts 38 schließt sich in Fig. 1 beispielhaft eine Zerkleinerungseinrichtung 48 an. An die Zerkleinerungseinrichtung 48 ein weiterer dynamischer Rost 50 unterhalb der Zerkleinerungseinrichtung 48 an. Vorzugsweise weist der Kaltklinker 52 beim Verlassen des Kühlers 18 eine Temperatur von 100°C oder weniger auf.

Aus dem zweiten Kühlgasraumabschnitt 38 wird beispielsweise Kühlerabluft 54 abgeführt und in einen Abscheider 56, wie beispielsweise einen Zyklon, zum Abscheiden von Feststoffen geführt. Die Feststoffe werden beispielhaft dem Kühler 18 wieder zugeführt. Dem Abscheider 56 ist ein Luft-Luft Wärmetauscher 58 nachgeschaltet, sodass die Kühlerabluft innerhalb des Wärmetauschers 58 Luft vorwärmt, die beispielsweise einer Rohmühle zugeführt wird.

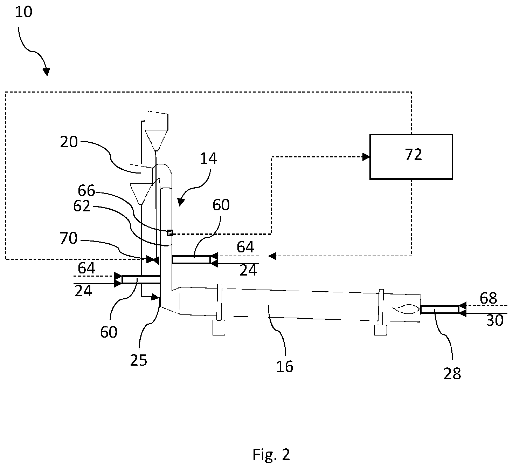

Fig. 2 zeigt einen Ausschnitt einer Zementherstellungsanlage 10 gemäß Fig.1, wobei die nicht dargestellten Bereiche beispielsweise denen der Fig. 1 entsprechend und gleiche Bezugszeichen gleich Elemente darstellen. Der in Fig. 2 dargestellte Calcinator 14 weist beispielhaft zwei Brennstoffaufgabevorrichtungen 60 auf. Es ist ebenfalls denkbar, dass der Calcinator 14 lediglich genau eine Brennstoffaufgabevorrichtung 60 oder mehr als zwei Brennstoffaufgabevorrichtungen 60 aufweist. Die beiden Brennstoffaufgabevorrichtungen 60 sind zueinander beabstandet an der Steigleitung 62 des Calcinators 14 angebracht. Beispielhaft sind die Brennstoffaufgabevorrichtungen 60 auf unterschiedlichen Höhenniveaus an der Steigleitung 62 angebracht. Jeder Brennstoffaufgabevorrichtung 60 ist jeweils ein Brennstoffeinlass 24 und ein Inertgaseinlass 64 zugeordnet, sodass Brennstoff und Inertgas in die Brennstoffaufgabevorrichtung 60 geleitet wird. Die Brennstoffaufgabevorrichtungen 60 sind beispielhaft um 180° zueinander versetzt angeordnet. Beispielsweise weist die Brennstoffaufgabevorrichtung ein Mittel zum Transportieren des Brennstoffs, wie eine Förderschnecke oder eine Schurre auf. Der Eintrag des oder der Brennstoffe kann beispielsweise auch durch die Förderung mit Hilfe eines Inertgases pneumatisch erfolgen.

Fig. 2 zeigt des Weiteren, dass dem Ofenbrenner 28 ein Brennstoffeinlass 30 und ein Inertgaseinlass 68 zugeordnet ist, sodass Brennstoff und Inertgas zu dem Ofenbrenner 28 geleitet wird. Der Brennstoffeinlass 24, 30 und der Inertgaseinlass 64, 68 sind beispielsweise separat zueinander oder als ein gemeinsamer Einlass in den Calcinator 14 oder den Ofen 16 ausgebildet. Bei dem Inertgas handelt es sich beispielsweise um CO2 oder Wasserdampf. Das Inertgas kann sowohl als Fördermittel als auch zur Beeinflussung der Zündung oder Kontrolle des Verbrennungsprozesses dienen.

Der Rohmehleinlass 70 in den Calcinator 14 wird in Fig. 2 beispielshaft durch den Feststoffauslass des der vorletzten Zyklonstufe gebildet. Der Rohmehleinlass 70 ist beispielsweise zwischen den beiden Calcinatorbrennern 60 angeordnet. Alternativ kann das Rohmehl vorzugsweise jeweils unterhalb der einzelnen Verbrennungszone stromabwärts der Brennstoffeinlässe 30 aufgegeben werden. Eine weitere Möglichkeit der Rohmehl- und Brennstoffaufgabe besteht darin, dass eine zur Steigleitung des Calcinators parallel angeordnete Brennkammer dazu genutzt wird, Brennstoff und Mehl gleichzeitig in einer sauerstoffarmen Zone aufzugeben. Vorzugsweise wird der Brennstoff in eine abwärts gerichtete Brennkammer zentral aufgegeben. Um die Brennstoffaufgabe herum erfolgt auf einem radialen Umfang oder am Umfang der zylindrischen Brennkammer die Aufgabe des Rohmehls dergestalt, dass der Brennstoff von einem Mehlvorhang ummantelt wird. Am unteren Ende der Brennkammer schließt diese an die aufwärts gerichtete Steigleitung des Calcinators an. Der vom Mehl ummantelte Brennstoff wird in die sauerstoffreiche Calcinatorströmung eingetragen und dort gezündet. Die Wärme wird direkt durch die Kalzinierreaktion des Rohmehls aufgezehrt.

Der Calcinator 14 weist beispielhaft eine Temperaturmesseinrichtung 66 zur Ermittlung der Temperatur innerhalb des Calcinators 14 auf. Die Zementanlage 10 umfasst des Weiteren eine Steuerungseinrichtung 72, die mit der Temperaturmesseinrichtung derart verbunden ist, dass die Temperaturmesseinrichtung 66 die ermittelte Temperatur an die Steuerungseinrichtung 72 übermittelt. Die Steuerungseinrichtung 72 ist mit dem Brennstoffeinlass 24, dem Rohmehleinlass 70 und/ oder dem Inertgaseinass 64 verbunden und derart ausgebildet, dass sie die Menge an Brennstoff, Rohmehl und/ oder Inertgas in den Calcinator 14 in Abhängigkeit der ermittelten Temperatur steuert/ regelt.

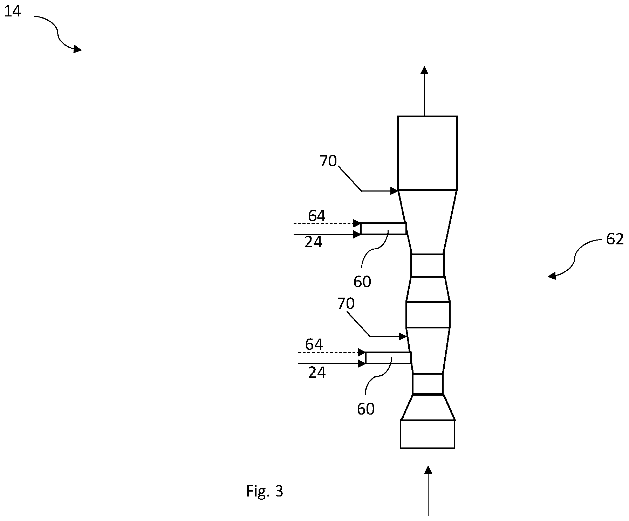

Fig. 3 zeigt ein weiteres Ausführungsbeispiel eines Calcinators 14 der Fig.1 und 2, wobei gleiche Bezugszeichen gleich Elemente darstellen. Die Steigleitung 62 des Calcinators 14 weist eine Mehrzahl von unterschiedlichen Querschittsflächen auf. Die rBrennstoffaufgabevorrichtungen 60 des Calcinators 14 sind beispielhaft ohne Winkelversatz, an der gleichen Seite der Steigleitung 62, aber auf unterschiedlichen Höhenniveaus angebracht. In Strömungsrichtung des Gases innerhalb der Steigleitung 62 ist jeder Brennstoffaufgabevorrichtung60 jeweils ein Rohmehleinlass 70 direkt vorzugsweise vor und/oder nachgeschaltet. Der Brennstoffeinlass 24 und der Inertgaseinlass 64 ist jeweils an der Brennstoffaufgabevorrichtung 60 des Calcinators 14, insbesondere auf gleicher Höhe mit der jeweiligen Brennstoffaufgabevorrichtung 60, angeordnet.

Die Querschnittsverengungen sorgen für eine ausgewogene Vermischung innerhalb der Steigleitung und führen somit zu einer Vergleichmäßigung der Verbrennung und der Temperaturverteilung in Längs- und Querrichtung der Steigleitung des Calcinators.

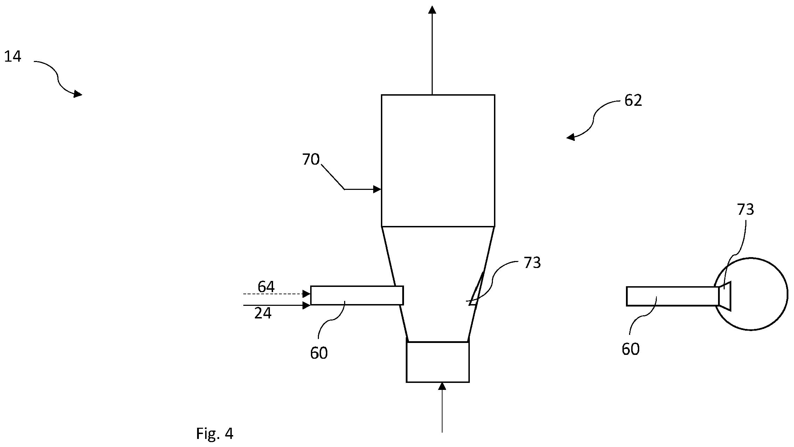

In Fig. 4 ist ein Ausschnitt eines Calcinators 14, wobei gleiche Bezugszeichen gleich Elemente darstellen. Der Calcinator 14 weist ein Leitelement 73 auf, das in der linken Darstellung beispielhaft innerhalb der Steigleitung 62 und in der rechten Darstellung beispielhaft an der Brennstoffaufgabevorrichtung 60 in der speziellen Form eines Flammrohres angebracht ist.

In der linken Darstellung ist das Leitelement 73 derart angeordnet, dass es eine Verengung des Querschnitts der Steigleitung 62 bewirkt. Das Leitelement 73 ist insbesondere plattenförmig, kammerförmig oder kastenförmig ausgebildet und an der Innenwand der Steigleitung 62 und beispielhaft auf der gleichen Höhe und gegenüberliegend zu der Brennstoffaufgabevorrichtung 60 angebracht.

In der rechten Darstellung weist das Leitelement 73 das Leitelement beispielhaft die Gestalt eines Diffusors auf, wobei sich der Querschnitt des Leitelements 73 in Strömungsrichtung des Brennstoffs vergrößert. Das Leitelement 73 ist an der Brennstoffaufgabevorrichtung 60, insbesondere an der Mündung der Brennstoffaufgabevorrichtung 60 in die Steigleitung 62 angebracht und ermöglicht insbesondere eine gezielte Einleitung des Brennstoffs in die Steigleitung 62. Es ist ebenfalls denkbar, dass das Leitelement 73 bündig mit der Steigleitung abschließt und nicht in diese hineinragt, sodass ein gleichmäßiger Einlass des Brennstoffs in die Steigleitung 62 ermöglicht wird.

Das Leitelement 73 ist beispielsweise aus einer hochtemperaturfesten Keramik oder einem Faserverbundwerkstoff ausgebildet.

### Bezugszeichenliste

- 10: Zementherstellungsanlage
- 12: Vorwärmer
- 14: Calcinator
- 16: Ofen
- 18: Kühler
- 20: Zyklon
- 22: Vorwärmerabgas
- 24: Brennstoffeinlass des Calcinators
- 25: Materialeinlass in den Ofen
- 26: Verbrennungsgaseinlass des Calcinators
- 28: Brenner oder Brennerlanze des Ofens
- 30: Brennstoffeinlass des Ofens
- 32: Sinterzone
- 34: Kühlgasraum
- 36: erster Kühlgasraumabschnitt
- 38: zweiter Kühlgasraumabschnitt
- 40: statischer Rost
- 42: erster Kühlgasstrom
- 44: dynamischer Rost
- 46: zweiter Kühlgasstrom
- 48: Zerkleinerungseinrichtung
- 50: dynamischer Rost 50
- 52: Kaltklinker
- 54: Kühlerabluft
- 56: Abscheider
- 58: Wärmetauscher
- 60: Brennstoffaufgabevorrichtung
- 62: Steigleitung des Calcinators
- 66: Temperaturmesseinrichtung
- 64: Inertgaseinlass
- 68: Inertgaseinlass in den Ofen
- 70: Rohmehleinlass in den Calcinator
- 72: Steuerungseinrichtung
- 73: Leitelement

## Patentansprüche

1. Zementherstellungsanlage (10) aufweisend
- einen Vorwärmer (12) zum Vorwärmen von Rohmehl,
- einen Calcinator (14) zum Kalzinieren des vorgewärmten Rohmehls,
- einen Ofen (16) mit einem Ofenbrenner (28) zum Brennen des Rohmehls zu Zementklinker, wobei der Ofen (16) einen Verbrennungsgaseinlass zum Einlassen eines Verbrennungsgases in den Ofen (16) mit einem Sauerstoffanteil von 30% bis 100% aufweist, und
- einen Kühler (18) zum Kühlen des Zementklinkers,
- wobei der Calcinator (14) und der Ofen (16) jeweils einen Brennstoffeinlass (24) zum Einlassen von Brennstoff in den Calcinator (14) und den Ofen (16) aufweist,
**dadurch gekennzeichnet, dass**
der Calcinator (14) und der Ofen (16) jeweils einen Inertgaseinlass (64, 68) zum jeweiligen Einlassen von Inertgas in den Calcinator (14) und den Ofen (16) aufweist.

2. Zementherstellungsanlage (10) nach Anspruch 1, wobei der Brennstoffeinlass (30, 24) und der Inertgaseinlass (64, 68) separat zueinander angeordnet sind und jeweils einen Einlass ausbilden.

3. Zementherstellungsanlage (10) nach Anspruch 1 oder 2, wobei der Brennstoffeinlass (30, 24) und der Inertgaseinlass (64, 68) zusammen einen Einlass ausbilden.

4. Zementherstellungsanlage (10) nach einem der vorangehenden Ansprüche, wobei der Calcinator (14) und/ oder der Ofen (16) jeweils eine Mehrzahl von Inertgaseinlässen (64, 68) aufweist.

5. Zementherstellungsanlage (10) nach einem der vorangehenden Ansprüche, wobei der Calcinator (14) mindestens einen Rohmehleinlass (70) zum Einlassen von Rohmehl in den Calcinator (14) aufweist, der in Strömungsrichtung des Gases innerhalb des Calcinators (14) stromaufwärts oder stromabwärts des Brennstoffeinlasses (24) und des Inertgaseinlasses (64) angeordnet ist.

6. Zementherstellungsanlage (10) nach einem der vorangehenden Ansprüche, wobei der Calcinator (14) zumindest zwei Rohmehleinlässe (62) zum Einlassen von Rohmehl in den Calcinator (14) aufweist und wobei zumindest einer der Rohmehleinlässe (62) in Strömungsrichtung des Gases innerhalb des Calcinators (14) stromaufwärts des Brennstoffeinlasses (24) angeordnet sind.

7. Zementherstellungsanlage (10) nach einem der vorangehenden Ansprüche, wobei die Zementherstellungsanlage (10) eine Steuerungseinrichtung (72) aufweist, die mit einer Temperaturmesseinrichtung (66) innerhalb des Calcinators (14) verbunden ist und derart ausgebildet ist, dass sie die Menge an Rohmehl, Inertgas und/ oder Brennstoff in den Calcinator (14) in Abhängigkeit der ermittelten Temperatur der Temperaturmesseinrichtung (66) steuert/ regelt.

8. Zementherstellungsanlage (10) nach einem der vorangehenden Ansprüche, wobei innerhalb des Calcinators (14) zumindest eine Querschnittsverengung des Calcinatorquerschnitts ausgebildet ist.

9. Zementherstellungsanlage (10) nach einem der vorangehenden Ansprüche, wobei innerhalb des Calcinators (14) zumindest ein Leitelement zum Leiten der Gasströmung und/ oder des Brennstoffs angeordnet ist.

10. Zementherstellungsanlage (10) nach Anspruch 9, wobei der Calcinator (14) eine Mehrzahl von Brennstoffaufgabevorrichtungen (60) aufweist, die jeweils einen Brennstoffeinlass (24) und einen Inertgaseinlass (64) umfassen und wobei jeder Brennstoffaufgabevorrichtung (60) ein Leitelement zugeordnet ist.

11. Zementherstellungsanlage (10) nach einem der vorangehenden Ansprüche, wobei zwischen dem Ofen (16) und dem Calcinator (14) ein Brennraum angeordnet ist, der einen Rohmehleinlass, einen Brennstoffeinlass, und einen Inertgaseinlass aufweist.

12. Verfahren zum Herstellen von Zementklinker aufweisend die Schritte:
- Vorwärmen von Rohmehl in einem Vorwärmer (12),
- Kalzinieren des vorgewärmten Rohmehls in einem Calcinator (14),
- Brennen des vorgewärmten und kalzinierten Rohmehls in einem Ofen (16) mit einem Ofenbrenner (28) zu Zementklinker, wobei dem Ofen (16) ein Verbrennungsgas mit einem Sauerstoffanteil von 30% bis 100% zugeführt wird, und
- Kühlen des Zementklinkers in einem Kühler (18),
wobei dem Ofen (16) und dem Calcinator (14) ein Brennstoff zugeführt wird, **dadurch gekennzeichnet, dass**
dem Ofen (16) und dem Calcinator (14) ein Inertgas zugeführt wird.

13. Verfahren nach Anspruch 12, wobei das Inertgas zusammen mit oder separat zu dem Brennstoff dem Calcinator (14) und/ oder dem Ofen (16) zugeführt wird.

14. Verfahren nach einem der Ansprüche 12 oder 13, wobei das Rohmehl in Strömungsrichtung des Gases innerhalb des Calcinators (14) vor dem Brennstoff und dem Inertgas in den Calcinator (14) eingelassen wird.

15. Verfahren nach einem der Ansprüche 12 bis 14, wobei die Temperatur innerhalb des Calcinators ermittelt wird und die Menge an Rohmehl, Inertgas und/ oder Brennstoff, die dem Calcinator (14) zugeführt wird, in Abhängigkeit der ermittelten Temperatur gesteuert/ geregelt wird.

16. Verfahren nach einem der Ansprüche 12 bis 15, wobei innerhalb des Calcinators (14) ein strömungsberuhigter Bereich mittels eines Leitelements oder einer Querschnittsverengung des Calcinatorquerschnitts ausgebildet wird.

## Claims

1. Cement production plant (10) comprising
- a preheater (12) for preheating raw meal,
- a calciner (14) for calcining the preheated raw meal,
- a furnace (16) with a furnace burner (28) for firing the raw meal to form cement clinker, wherein the furnace (16) has a combustion gas inlet for admitting a combustion gas with an oxygen content of 30% to 100% into the furnace (16), and
- a cooler (18) for cooling the cement clinker,
- wherein the calciner (14) and the furnace (16) each have a respective fuel inlet (24) for admitting fuel into the calciner (14) and the furnace (16),
**characterized in that**
the calciner (14) and the furnace (16) each have a respective inert gas inlet (64, 68) for respectively admitting inert gas into the calciner (14) and the furnace (16).

2. Cement production plant (10) according to Claim 1, wherein the fuel inlet (30, 24) and the inert gas inlet (64, 68) are arranged separately from one another and each form an inlet.

3. Cement production plant (10) according to Claim 1 or 2, wherein the fuel inlet (30, 24) and the inert gas inlet (64, 68) together form an inlet.

4. Cement production plant (10) according to one of the preceding claims, wherein the calciner (14) and/or the furnace (16) have/has a respective plurality of inert gas inlets (64, 68).

5. Cement production plant (10) according to one of the preceding claims, wherein the calciner (14) has at least one raw meal inlet (70) for admitting raw meal into the calciner (14), said raw meal inlet being arranged upstream or downstream of the fuel inlet (24) and the inert gas inlet (64) in the direction of flow of the gas within the calciner (14).

6. Cement production plant (10) according to one of the preceding claims, wherein the calciner (14) has at least two raw meal inlets (62) for admitting raw meal into the calciner (14), and wherein at least one of the raw meal inlets (62) is arranged upstream of the fuel inlet (24) in the direction of flow of the gas within the calciner (14).

7. Cement production plant (10) according to one of the preceding claims, wherein the cement production plant (10) comprises a control device (72) which is connected to a temperature measuring device (66) within the calciner (14) and which is configured in such a way that it controls/regulates the quantity of raw meal, inert gas and/or fuel in the calciner (14) in dependence on the temperature ascertained by the temperature measuring device (66).

8. Cement production plant (10) according to one of the preceding claims, wherein at least one cross-sectional constriction of the calciner cross section is configured within the calciner (14).

9. Cement production plant (10) according to one of the preceding claims, wherein at least one guide element for guiding the gas flow and/or the fuel is arranged within the calciner (14).

10. Cement production plant (10) according to Claim 9, wherein the calciner (14) has a plurality of fuel charging apparatuses (60) which each comprise a fuel inlet (24) and an inert gas inlet (64), and wherein a guide element is assigned to each fuel charging apparatus (60).

11. Cement production plant (10) according to one of the preceding claims, wherein a combustion chamber is arranged between the furnace (16) and the calciner (14), said combustion chamber having a raw meal inlet, a fuel inlet and an inert gas inlet.

12. Method for producing cement clinker, comprising the following steps:
- preheating raw meal in a preheater (12),
- calcining the preheated raw meal in a calciner (14),
- firing the preheated and calcined raw meal in a furnace (16) with a furnace burner (28) to form cement clinker, wherein a combustion gas with an oxygen content of 30% to 100% is supplied to the furnace (16), and
- cooling the cement clinker in a cooler (18), wherein a fuel is supplied to the furnace (16) and to the calciner (14),
**characterized in that**
an inert gas is supplied to the furnace (16) and to the calciner (14).

13. Method according to Claim 12, wherein the inert gas is supplied to the calciner (14) and/or to the furnace (16) together with or separately from the fuel.

14. Method according to either one of Claims 12 and 13, wherein the raw meal is admitted into the calciner (14) in the direction of flow of the gas within the calciner (14) prior to the fuel and the inert gas.

15. Method according to one of Claims 12 to 14, wherein the temperature within the calciner is ascertained and the quantity of raw meal, inert gas and/or fuel that is supplied to the calciner (14) is controlled/regulated in dependence on the ascertained temperature.

16. Method according to one of Claims 12 to 15, wherein a flow-calmed region is configured within the calciner (14) by means of a guide element or a cross-sectional constriction of the calciner cross section.

## Revendications

1. Installation de fabrication de ciment (10), présentant
- un préchauffeur (12) servant à préchauffer de la farine crue,
- un dispositif de calcination (14) servant à calciner la farine crue préchauffée,
- un four (16) pourvu d'un brûleur de four (28) servant à cuire la farine crue en clinker de ciment, le four (16) présentant une entrée de gaz de combustion pour laisser entrer un gaz de combustion dans le four (16) ayant une teneur en oxygène de 30 % à 100 %, et
- un refroidisseur (18) servant à refroidir le clinker de ciment,
- le dispositif de calcination (14) et le four (16) présentant respectivement une entrée de combustible (24) pour laisser entrer un combustible dans le dispositif de calcination (14) et le four (16),
**caractérisée en ce que** le dispositif de calcination (14) et le four (16) présentent respectivement une entrée de gaz inerte (64, 68) pour laisser entrer respectivement un gaz inerte dans le dispositif de calcination (14) et le four (16).

2. Installation de fabrication de ciment (10) selon la revendication 1, dans laquelle l'entrée de combustible (30, 24) et l'entrée de gaz inerte (64, 68) sont disposées séparément l'une de l'autre et constituent respectivement une entrée.

3. Installation de fabrication de ciment (10) selon la revendication 1 ou 2, dans laquelle l'entrée de combustible (30, 24) et l'entrée de gaz inerte (64, 68) constituent ensemble une entrée.

4. Installation de fabrication de ciment (10) selon l'une quelconque des revendications précédentes, dans laquelle le dispositif de calcination (14) et/ou le four (16) présentent respectivement une pluralité d'entrées de gaz inerte (64, 68).

5. Installation de fabrication de ciment (10) selon l'une quelconque des revendications précédentes, dans laquelle le dispositif de calcination (14) présente au moins une entrée de farine crue (70) pour laisser entrer de la farine crue dans le dispositif de calcination (14) qui est disposée dans la direction d'écoulement du gaz à l'intérieur du dispositif de calcination (14) en amont ou en aval de l'entrée de combustible (24) et de l'entrée de gaz inerte (64).

6. Installation de fabrication de ciment (10) selon l'une quelconque des revendications précédentes, dans laquelle le dispositif de calcination (14) présente au moins deux entrées de farine crue (62) pour laisser entrer de la farine crue dans le dispositif de calcination (14), et dans laquelle au moins l'une des entrées de farine crue (62) est disposée dans la direction d'écoulement du gaz à l'intérieur du dispositif de calcination (14) en amont de l'entrée de combustible (24).

7. Installation de fabrication de ciment (10) selon l'une quelconque des revendications précédentes, l'installation de fabrication de ciment (10) présentant un dispositif de commande (72) qui est relié à un dispositif de mesure de température (66) à l'intérieur du dispositif de calcination (14) et est réalisé de façon à commander/réguler la quantité de farine crue, de gaz inerte et/ou de combustible dans le dispositif de calcination (14) en fonction de la température établie du dispositif de mesure de température (66).

8. Installation de fabrication de ciment (10) selon l'une quelconque des revendications précédentes, dans laquelle au moins un rétrécissement de section transversale de la section transversale du dispositif de calcination est réalisé à l'intérieur du dispositif de calcination (14).

9. Installation de fabrication de ciment (10) selon l'une quelconque des revendications précédentes, dans laquelle au moins un élément de guidage servant à guider l'écoulement de gaz et/ou de combustible est disposé à l'intérieur du dispositif de calcination (14) .

10. Installation de fabrication de ciment (10) selon la revendication 9, dans laquelle le dispositif de calcination (14) présente une pluralité de dispositifs de chargement de combustible (60) qui comprennent respectivement une entrée de combustible (24) et une entrée de gaz inerte (64), et dans laquelle chaque dispositif de chargement de combustible (60) est associé à un élément de guidage.

11. Installation de fabrication de ciment (10) selon l'une quelconque des revendications précédentes, dans laquelle entre le four (16) et le dispositif de calcination (14), une chambre de combustion est disposée qui présente une entrée de farine crue, une entrée de combustible et une entrée de gaz inerte.

12. Procédé de fabrication de clinker de ciment, présentant les étapes consistant à :
- préchauffer de la farine crue dans un préchauffeur (12),
- calciner la farine crue préchauffée dans un dispositif de calcination (14),
- cuire la farine crue préchauffée et calcinée dans un four (16) pourvu d'un brûleur de four (28) en clinker de ciment, un gaz combustible ayant une teneur en oxygène de 30 % à 100 % étant amené au four (16), et
- refroidir le clinker de ciment dans un refroidisseur (18),
un combustible étant amené au four (16) et au dispositif de calcination (14),
**caractérisé en ce qu'**un gaz inerte est amené au four (16) et au dispositif de calcination (14).

13. Procédé selon la revendication 12, dans lequel le gaz inerte est amené au dispositif de calcination (14) et/ou au four (16) conjointement avec le combustible ou séparément de celui-ci.

14. Procédé selon l'une quelconque des revendications 12 et 13, dans lequel la farine crue est entrée dans le dispositif de calcination (14) avant le combustible et le gaz inerte dans la direction d'écoulement du gaz à l'intérieur du dispositif de calcination (14).

15. Procédé selon l'une quelconque des revendications 12 à 14, dans lequel la température à l'intérieur du dispositif de calcination est déterminée, et la quantité de farine crue, de gaz inerte et/ou de combustible qui est amenée au dispositif de calcination (14) est commandée/régulée en fonction de la température établie.

16. Procédé selon l'une quelconque des revendications 12 à 15, dans lequel, à l'intérieur du dispositif de calcination (14), une zone à écoulement stabilisé est réalisée au moyen d'un élément de guidage ou d'un rétrécissement de section transversale de la section transversale du dispositif de calcination.
